# EUROPEAN PATENT SPECIFICATION

(11) **EP 3 041 256 B1**
(45) Date of publication and mention of the grant of the patent: **14.08.2019**
(21) Application number: 15185316.5
(22) Date of filing: 15.09.2015
(51) Int. Cl.: H04Q 9/00, G01R 31/36, G06F 1/32, G06F 1/3206, G01R 31/44

(54) **METHOD AND DEVICE OF STATUS NOTIFICATION**
VERFAHREN UND VORRICHTUNG ZUR ZUSTANDSMELDUNG
PROCÉDÉ ET DISPOSITIF DE NOTIFICATION D'ÉTAT

(30) Priority: 31.12.2014 CN 201410852609
(43) Date of publication of application: 06.07.2016
(73) Proprietor: Xiaomi Inc., Beijing 100085 (CN)
(72) Inventor: WANG, Yang, 100085 Haidian District (CN); FU, Qiang, 100085 Haidian District (CN); CHEN, Hao, 100085 Haidian District (CN)
(74) Representative: Sadler, Peter Frederick

(56) References cited:
- CN-A- 102 095 232
- CN-A- 102 938 023
- JP-A- H11 271 407
- JP-A- 2009 211 300
- JP-B2- 3 274 574
- US-A1- 2014 095 091
- US-B1- 8 532 002

## Description

### TECHNICAL FIELD

The present disclosure generally relates to the field of information technology, and more particularly, to a method of status notification and a device thereof

### BACKGROUND

In the wake of increasingly serious problems caused by air pollution, air purifiers are used more and more widely to improve air quality in living spaces. The purifying effect of an air purifier is directly influenced by a filter element, which is a core element of the air purifier. With increase of usage time, the filter element of the air purifier is depleted gradually. However, as a current status of the filter element may not be acquired by users, the filter element cannot be timely replaced, which results in that the air purifier fails to work normally, and the air quality at the living space is unable to be purified. In order to establish a better living environment, it is necessary to notify about statuses of the filter element in the air purifier, so as to enable the air purifier to be always kept in a normal work condition.

US 2014/0095091 A1 describes a method for monitoring usage details of a mobile GPS device, in order to calculate an estimated remaining battery life.

Document CN 102 095 232 A provides a method to prompt a user to clean the filter of an air conditioner at an appropriate time, based on the accumulated running time of the air conditioner and the speed of the inner motor.

### SUMMARY

In order to overcome problems existed in related arts, a method of status notification and a device thereof are provided by the present disclosure.

According to a first aspect of embodiments of the present disclosure, there is provided a method of status notification according to claim 1.

In combination with the first aspect, in a first possible implementation mode of the first aspect, the acquiring usage information of a air purifier includes:
activating a function of Bluetooth™ and acquiring the usage information of the air purifier through a Bluetooth™ connection; or
activating a function of NFC (Near Field Communication) and acquiring the usage information of the air purifier through a NFC data channel; or
receiving the usage information of the air purifier forwarded by a router.

In combination with the first aspect, in a second possible implementation mode of the first aspect, the alerting about a current status of the air purifier, when the consumption reaches a preset consumption alerting threshold, includes:
displaying a data display page, the data display page being used to display the current consumption of the air purifier usage lifetime; and
alerting about the current status of the air purifier, when the consumption reaches the preset consumption alerting threshold, based on the consumption displayed on the data display page.

In combination with the second possible implementation mode of the first aspect, in a third possible implementation mode of the first aspect, the alerting about a current status of the air purifier, when the consumption reaches a preset consumption alerting threshold, includes:
alerting about the current status of the air purifier usage lifetime with a first alerting manner, when the consumption reaches a first threshold;
alerting about the current status of the air purifier usage lifetime with a second alerting manner, when the consumption reaches a second threshold; and
alerting about the current status of the air purifier usage lifetime with a third alerting manner, when the consumption reaches a third threshold;
wherein, the first threshold is smaller than the second threshold, and the second threshold is smaller than the third threshold.

In combination with the first aspect, in a fourth possible implementation mode of the first aspect, the calculating current consumption of the air purifier usage lifetime according to the usage information of the air purifier includes:
acquiring every on-off time of the air purifier;
obtaining a theoretical usage duration of the air purifier by accumulating every on-off time of the air purifier; and
calculating the current consumption of the air purifier usage lifetime according to the theoretical usage duration of the air purifier and a lifespan of the air purifier.

In combination with the first aspect, in a fifth possible implementation mode of the first aspect, the method further includes:
acquiring a working level of the air purifier;
accordingly, the calculating current consumption of the air purifier according to the usage information of the air purifier includes:
   determining level weighted values for every on-off time, according to the working level of the air purifier within every on-off time;
   obtaining an actual usage duration of the air purifier by accumulating products of every on-off time and corresponding level weighted value of the air purifier; and
   calculating the current consumption of the air purifier according to the actual usage duration of the air purifier and a lifespan of the air purifier.

In combination with the first aspect, in a sixth possible implementation mode of the first aspect, the method further includes:
acquiring a working area of the air purifier;
accordingly, the calculating current consumption of the air purifier according to the usage information of the air purifier includes:
   determining area weighted values for every on-off time, according to the working area of the air purifier within every on-off time;
   obtaining an actual usage duration of the air purifier by accumulating products of every on-off time and corresponding area weighted value of the air purifier; and
   calculating the current consumption of the air purifier according to the actual usage duration of the air purifier and the lifespan of the air purifier.

In combination with any one of the first aspect to the sixth possible implementation mode thereof, in an seventh possible implementation mode of the first aspect, the method further includes:
acquiring purchase history of a user account;
determining a replacement warning consumption of the air purifier, according to the current consumption, the usage information and the purchase history of the user account; and
displaying a shortcut purchase option when the current consumption reaches the replacement warning consumption, the shortcut purchase option being used to jump to a purchase link of the air purifier.

In combination with the seventh possible implementation mode of the first aspect, in a eighth possible implementation mode of the first aspect, the determining a replacement warning consumption of the air purifier, according to the current consumption, the usage information and the purchase history of the user account, includes:
determining a remainder of days of usage according to the usage information and the current consumption;
determining a logistic time according to a shipping address of the seller and a delivery address of the user from the purchase history of the user account; and
determining the replacement warning consumption of the air purifier, according to the remainder of days of usage and the logistic time.

According to a second aspect of embodiments of the present disclosure, there is provided a device for status notification according to claim 10.

In combination with the second aspect, in a first possible implementation of the second aspect, the device further includes:
a third acquisition module, configured to acquire a working level of the air purifier;
accordingly, the calculation module is configured to determine level weighted values for every on-off time, according to the working level of the air purifier within every on-off time; obtain an actual usage duration of the air purifier by accumulating products of every on-off time and corresponding level weighted value of the air purifier; and calculate the current consumption of the air purifier according to the actual usage duration of the air purifier usage lifetime and a lifespan of the air purifier.

In combination with the second aspect, in a second possible implementation of the second aspect, the device further includes:
a fourth acquisition, configured to acquire a working area of the air purifier;
wherein, the calculation module is configured to determine area weighted values for every on-off time, according to the working area of the air purifier within every on-off time; obtain an actual usage duration of the air purifier by accumulating products of every on-off time and corresponding area weighted value of the air purifier; and calculate the current consumption of the air purifier according to the actual usage duration of the air purifier and a lifespan of the air purifier.

In combination with any one of the second aspect to the second possible implementation mode thereof, in an third possible implementation of the second aspect, the device further includes:
a fifth acquisition module, configured to acquire purchase history of a user account;
a determination module, configured to determine a replacement warning consumption of the air purifier, according to the current consumption, the usage information and the purchase history of the user account; and
a display module, configured to display a shortcut purchase option when the current consumption reaches the replacement warning consumption, the shortcut purchase option being used to jump to a purchase link of the air purifier.

A device of status notification, including:
a processor; and
a memory for storing instructions executable by the processor;
wherein the processor is configured to:
   acquire usage information of a air purifier, the usage information including at least every on-off time of the air purifier;
   calculate current consumption of the air purifier according to the usage information of the air purifier; and
   alert about a current status of the air purifier when the consumption reaches a preset consumption alerting threshold.

According to a third aspect of the embodiments of the present disclosure, there is provided a computer program, which when executing on a processor, performs a method according to the first aspect mentioned above.

Following advantageous effects may be achieved by the technical solution provided in the embodiments of the present disclosure.

The usage information of the air purifier, including at least every on-off time, is acquired, the current consumption of the air purifier is calculated according to the usage information of the air purifier, and the current status of the air purifier is alerted about when the consumption reaches the preset consumption alerting threshold. Since the current consumption of the air purifier is calculated according to the usage information, which is more accurate than operation experience of users, and the users may be alerted timely when the consumption reaches the preset consumption alerting threshold, the air purifier may be enabled to be always kept in normal working condition.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method of status notification, according to an exemplary embodiment.
Fig. 2 is a flow chart showing a method of status notification, according to an exemplary embodiment.
Fig. 3 is a schematic diagram showing a display interface of a terminal, according to an exemplary embodiment.
Fig. 4 is a schematic diagram showing a display interface of a terminal, according to an exemplary embodiment.
Fig. 5 is a schematic diagram showing a display interface of a terminal, according to an exemplary embodiment.
Fig. 6 is a schematic diagram showing a display interface of a terminal, according to an exemplary embodiment.
Fig. 7 is a block diagram illustrating a device of status notification, according to an exemplary embodiment.
FIG. 8 is a block diagram of a device of status notification, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

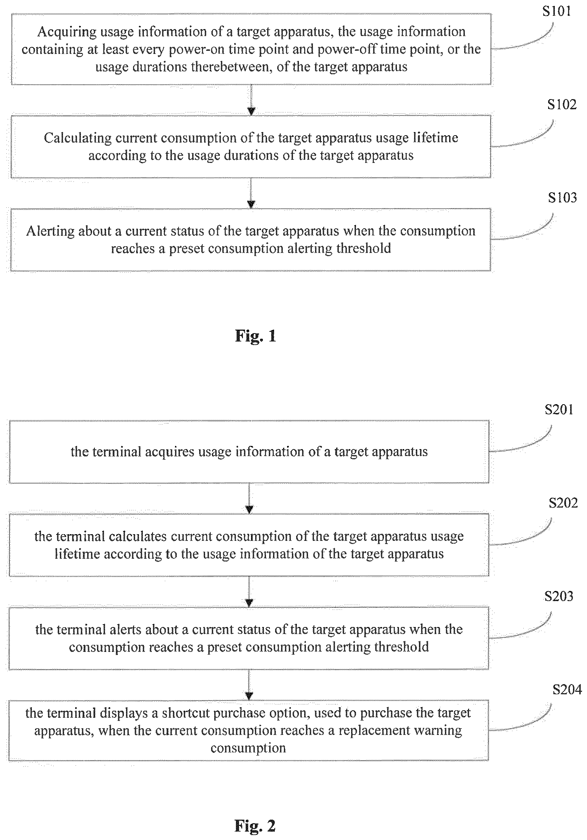

Fig. 1 is the flow chart of a method of status notification, according to an exemplary embodiment. Referring to FIG. 1, the method of status notification may be applied in a terminal and includes the following steps.

In step 101, usage information of a air purifier, including at least every on-off time of the air purifier, may be acquired.

In step 102, current consumption of the air purifier may be calculated according to the usage information of the air purifier.

In step 103, a current status of the air purifier may be alerted about when the consumption reaches a preset consumption alerting threshold.

According to the method provided by the embodiment of the present disclosure, the usage information of the air purifier, including at least every on-off time, is acquired, the current consumption of the air purifier is calculated according to the usage information of the air purifier, and the current status of the air purifier is alerted about when the consumption reaches the preset consumption alerting threshold. Since the current consumption of the air purifier is calculated according to the usage information, which is more accurate than operation experience of users, and the users may be alerted timely when the consumption reaches the preset consumption alerting threshold, the air purifier may be enabled to be always kept in normal working condition.

In an embodiment of the present disclosure, acquiring usage information of a air purifier includes:
activating a function of Bluetooth™ and acquiring the usage information of the air purifier through a Bluetooth™ connection; or
activating a function of NFC (Near Field Communication) and acquiring the usage information of the air purifier through a NFC data channel; or
receiving the usage information of the air purifier forwarded by a router.

In an embodiment of the present disclosure, alerting about a current status of the air purifier, when the consumption reaches a preset consumption alerting threshold, includes:
displaying a data display page, the data display page being used to display the current consumption of the air purifier; and
alerting about the current status of the air purifier based on the consumption displayed on the data display page, when the consumption reaches the preset consumption alerting threshold.

In an embodiment of the present disclosure, alerting about a current status of the air purifier, when the consumption reaches a preset consumption alerting threshold, includes:
alerting about the current status of the air purifier with a first alerting manner, when the consumption reaches a first threshold;
alerting about the current status of the air purifier with a second alerting manner, when the consumption reaches a second threshold; and
alerting about the current status of the air purifier with a third alerting manner, when the consumption reaches a third threshold;
wherein, the first threshold is smaller than the second threshold, and the second threshold is smaller than the third threshold.

In an embodiment of the present disclosure, calculating current consumption of the air purifier according to the usage information of the air purifier includes:
acquiring every on-off time of the air purifier;
obtaining a theoretical usage duration of the air purifier by accumulating every on-off time of the air purifier; and
calculating the current consumption of the air purifier according to the theoretical usage duration of the air purifier and a lifespan of the air purifier.

In an embodiment of the present disclosure, the method further includes:
acquiring environmental data of the air purifier;

Accordingly, the calculating current consumption of the air purifier according to the usage information of the air purifier includes:
determining environment weighted values for every on-off time, according to the environmental data of the air purifier within every on-off time;
obtaining an actual usage duration of the air purifier by accumulating products of every on-off time and corresponding environment weighted value of the air purifier; and
calculating the current consumption of the air purifier according to the actual usage duration of the air purifier and the lifespan of the air purifier.

In an embodiment of the present disclosure, the method further includes:
acquiring a working level of the air purifier;

Accordingly, the calculating current consumption of the air purifier according to the usage information of the air purifier includes:
determining level weighted values for every on-off time, according to the working level of the air purifier within every on-off time;
obtaining an actual usage duration of the air purifier by accumulating products of every on-off time and corresponding level weighted value of the air purifier; and
calculating the current consumption of the air purifier according to the actual usage duration of the air purifier and the lifespan of the air purifier.

In an embodiment of the present disclosure, the method further includes:
acquiring a working area of the air purifier;

Accordingly, the calculating current consumption of the air purifier according to the usage information of the air purifier includes:
determining area weighted values for every on-off time, according to the working area of the air purifier within every on-off time;
obtaining an actual usage duration of the air purifier by accumulating products of every on-off time and corresponding area weighted value of the air purifier; and
calculating the current consumption of the air purifier according to the actual usage duration of the air purifier and the lifespan of the air purifier.

In an embodiment of the present disclosure, the method further includes:
acquiring purchase history of a user account;
determining a replacement warning consumption of the air purifier, according to the current consumption, the usage information and the purchase history of the user account; and
displaying a shortcut purchase option when the current consumption reaches the replacement warning consumption, the shortcut purchase option being used to jump to a purchase link of the air purifier.

In an embodiment of the present disclosure, the determining a replacement warning consumption of the air purifier, according to the current consumption, the usage information and the purchase history of the user account, includes:
determining a remainder days of usage according to the usage information and the current consumption;
determining a logistic time according to a shipping address of seller and a delivery address of user from the purchase history of the user account; and
determining the replacement warning consumption of the air purifier, according to the remainder days of usage and the logistic time.

Alternative embodiments of the present application may be obtained from any combinations of any alternative technical solutions mentioned above.

Fig. 2 is the flow chart of a method of status notification, according to an exemplary embodiment. Referring to FIG. 2, the method of status notification may be applied in a terminal and includes the following steps.

In step S201, the terminal acquires usage information of a air purifier.

Wherein, the terminal may be a mobile phone, a tablet computer, or the like, and the air purifier may be an air purifier or the like. The present embodiment is not limited to any specific type of the terminal and the air purifier.

As to a process for acquiring the usage information of the air purifier, following embodiments may be included depending on different functions of the terminal and the air purifier.

In an embodiment of the present disclosure, the air purifier may be provided with a recording function for automatically recording a number of times of on-off, every on-off time, and a working level, and the terminal may be provided with an inquiring function for inquiring air quality over the cloud to acquire the corresponding environmental data.

In another embodiment of the present disclosure, the air purifier may be also provided with a function of recording and monitoring, for automatically recording a number of times of on-off, every on-off time, and a working level, monitoring air quality within every on-off time to acquire environmental data indicative of the air quality, and pushing various data acquired to the terminal. The terminal may be provided with a storage function for storing the various data pushed from the air purifier.

In yet another embodiment, the air purifier may be also provided with a function of recording, monitoring and storage, for automatically recording a number of times of on-off, every on-off time, and a working level, monitoring air quality within every on-off time to acquire environmental data, and storing the acquired data in a storage unit such as a memory or a flash memory. The terminal may be provided with a function of data acquisition, for acquiring usage information of the air purifier from the same, including at least every on-off time of the air purifier.

In the present embodiment, both the terminal and the air purifier are provided with a function for establish communication with other equipments in a manner of radio frequency or network. With the function, in order to acquire the usage information of the air purifier, after activating a Bluetooth™ function, the terminal may establish a communication with the air purifier through a Bluetooth™ connection, and acquire the usage information of the air purifier via the communication. Also, after activating a NFC function, the terminal may establish a NFC data channel with the air purifier, and acquire the usage information of the air purifier via the air purifier. Moreover, the terminal may establish a LAN (local area network) with the air purifier with a router, and receive the usage information of the air purifier forwarded by the router within the LAN. In addition to those manners described above, other manners may be utilized by the terminal to acquire the usage information of the air purifier, detailed description of which may be omitted herein.

In step S202, the terminal calculates current consumption of the air purifier according to the usage information of the air purifier.

Actual usage condition of the air purifier may be indicated accurately by the usage information thereof, so the current consumption of the air purifier can be calculated by the terminal according to the usage information of the air purifier. Furthermore, the current consumption of the air purifier serves as an important basis for performing status notification of the air purifier and thus establishing a better living place for users. Therefore, in order to prevent the air purifier from failing to work normally due to excessive consumption, the terminal may calculate the current consumption of the air purifier according to the usage information thereof after acquiring the same.

The terminal may calculate the current consumption of the air purifier according to the usage information thereof through following steps (1)-(3).
(1) The terminal may acquire information indicative of the amount of time the air purifier has been in use, by being powered on. The terminal may acquire every on-off time of the air purifier from the usage information of the air purifier.
Wherein, the on-off time may include power-on time points and power-off time points, or may include usage durations therebetween. In embodiments of the present disclosure, the on-off time may be set as the usage durations between the power-on time points and the power-off time points. The terminal may acquire the on-off time of the air purifier directly from the usage information thereof.
(2) The terminal may obtain a theoretical usage duration of the air purifier by accumulating the acquired every on-off time of the air purifier.
Without considering influence from other external factors, the terminal may obtain the theoretical usage duration of the air purifier merely by accumulating the acquired every on-off time of the air purifier.
For example, a process of obtaining the theoretical usage duration of the air purifier by accumulating the acquired every on-off time of the air purifier may refer to following detailed description about usage information of a air purifier illustrated in Table 1.

**Table 1**

| number of time(s) of on-off/periods of activation | on-off/activation time (hour(s)) |
|---|---|
| 1 | 3 |
| 2 | 8 |
| 3 | 4.5 |
| 4 | 5.5 |
| 5 | 10 |
| 6 | 13 |
| 7 | 5 |
| 8 | 2 |
| 9 | 3 |
| 10 | 7 |

Based on information in Table 1, the terminal may obtain the theoretical usage duration of the air purifier, by accumulating the acquired 10 on-off time of the air purifier, =3+8+4.5+5.5+10+13+5+2+3+7=62 hours.
(3) The terminal may calculate the current consumption of the air purifier according to the theoretical usage duration of the air purifier and a lifespan of the air purifier.

In the present embodiment, performance of the air purifier may be reflected from the lifespan thereof, which may be an average lifespan of the air purifier obtained by a manufacturer thereof through experiments conducted thereto. The lifespan of the air purifier may be, for example, 3000 hours, 5000 hours, or the like. After obtaining the theoretical usage duration of the air purifier, the terminal may obtain a ratio of the theoretical usage duration of the air purifier to the lifespan thereof by ratioing the theoretical usage duration to the lifespan.

For example, the lifespan of the air purifier may be 5000 hours. If the theoretical usage duration of the air purifier obtained by the terminal through an accumulation of every on-off time of the air purifier is 3000 hours, the current consumption of the air purifier = the theoretical usage duration of the air purifier / the lifespan of the air purifier = 3000/5000 =60%. That is, the current consumption of the air purifier is 60%.

In actual application, the current consumption of the air purifier may depend on various factors, such as working environment of the air purifier, a working level thereof and the like. Taking influences from those factors into account, the terminal may perform a calculation according to any one embodiment selected from following (1)-(3), as the influence factor may be, when calculating the current consumption of the air purifier.

### (1) Considering the working environment of the air purifier

In the present embodiment, consumption of the air purifier may vary as the air purifier works in different environments. For example, when working in a good environment, the air purifier may bear a small consumption; while when working in a bad environment, the air purifier may bear a large consumption. Moreover, in the present embodiment, different environments may correspond to different environmental data, so as to enabling the consumption of the air purifier to be weighted according to influences from the different environments. Wherein, the environmental data of the air purifier may include data of particle matter concentration, data of pollutant concentration, and the like.

In the present embodiment, the environmental data may be stored in a cloud or in the terminal. Accordingly, the terminal may acquire the environmental data from the cloud when stored in the cloud; and the terminal may acquire the environmental data directly from its own storage unit when stored in the terminal.

In order to calculate the current consumption of the air purifier more accurately, the terminal may adopt following process including (1.1)-(1.3) when calculating the current consumption of the air purifier according to the usage information of the air purifier, based on the acquired environmental data.

### (1.1) determining environment weighted values for every on-off time, according to the environmental data of the air purifier within every on-off time.

In the method provided by the present embodiment, environment around location of the air purifier may be monitored in long term before calculating the current consumption of the air purifier, so as to obtain several kinds of environmental data representative of the location of the air purifier, and thus different environment weighted values may be determined for different environmental data according to environmental quality indicated by the environmental data. Specifically, as the different environment weighted values are determined for different environmental data, a small environment weighted value may be determined for environmental data representative of a good environmental quality, while a large environment weighted value may be determined for environmental data representative of a bad environmental quality. Thus, there may be a corresponding relation formed between the environmental data and the environment weighted value. Moreover, in the method provided by the present embodiment, the corresponding relation between the environmental data and the environment weighted value may be stored after the determining different environment weighted values for different environmental data, for ease of subsequent application. When being stored, the corresponding relation between the environmental data and the environment weighted value may be stored by the terminal either locally or in the cloud.

Based on the corresponding relation between the environmental data and the environment weighted value, the terminal may search out the environment weighted values within every on-off time from the corresponding relation when it acquires the environmental data of the air purifier within every on-off time.

### (1.2) the terminal obtains an actual usage duration of the air purifier by accumulating products of every on-off time and corresponding environment weighted value of the air purifier.

The actual usage duration of the air purifier depends not only every on-off time of the air purifier but also the environment weighted value corresponding to every on-off time. Therefore, the actual usage duration of the air purifier may be obtained through multiplying every on-off time by corresponding environment weighted value of the air purifier and accumulating products thus derived.

For example, a process of obtaining the actual usage duration of the air purifier, by accumulating products of every on-off time and corresponding environment weighted value of the air purifier, may refer to following detailed description about usage information and corresponding environment weighted values of a air purifier illustrated in Table 2.

**Table 2**

| number of time(s) of on-off | on-off time (hour(s)) | environment weighted value |
|---|---|---|
| 1 | 5 | 3 |
| 2 | 3 | 2 |
| 3 | 7 | 4 |
| 4 | 2.5 | 2 |
| 5 | 4 | 3 |

Based on the data shown in the above Table 2, the actual usage duration of the air purifier=5^{∗}3+3^{∗}2+7^{∗}4+2.5^{∗}2+4^{∗}3=66 hours.

### (1.3) the terminal calculates the current consumption of the air purifier according to the actual usage duration of the air purifier and the lifespan of the air purifier.

After obtaining the actual usage duration of the air purifier, the terminal may obtain the current consumption of the air purifier by acquiring a ratio of the actual usage duration of the air purifier to the lifespan thereof.

For example, the lifespan of the air purifier may be 5000 hours. If the actual usage duration of the air purifier obtained by the terminal, through accumulating the products of every on-off time and corresponding environment weighted values of the air purifier, is 1000 hours, the current consumption of the air purifier = the actual usage duration of the air purifier / the lifespan of the air purifier = 1000/5000 =20%. That is, the current consumption of the air purifier is 20%.

### (2) Considering the working level of the air purifier

In the present embodiment, working levels of the air purifier may include a regular level, a powerful level, a hibernate level and the like. Consumption of the air purifier may vary as the air purifier works in different working levels. For example, when working in the regular level, the air purifier may bear a small consumption; when working in the powerful level, the air purifier may bear a large consumption; while when working in the hibernate level, the air purifier may bear a minimum consumption.

In the present embodiment, the working levels may be stored either in the air purifier or in the terminal. Accordingly, the terminal may acquire the working levels from the air purifier by means of Bluetooth™, NFC or the like, when the working levels are stored in the air purifier; and the terminal may acquire the working levels directly from its own storage unit, when the working levels are stored in the terminal.

In order to calculate the current consumption of the air purifier more accurately, the terminal may adopt following process including (2.1)-(2.3) when calculating the current consumption of the air purifier according to the usage information of the air purifier, based on the acquired working level.

### (2.1) the terminal determines level weighted values for every on-off time, according to the working level of the air purifier within every on-off time.

In the method provided by the present embodiment, the terminal may set different level weighted values for different working levels before calculating the current consumption of the air purifier. In specific settings, the terminal may set a maximum level weighted value for the powerful level, a minimum level weighted value for the hibernate level, and a level weighted value between the maximum and minimum level weighted value for the regular level. For example, a level weighted value 5 may be set for the powerful level, a level weighted value 3 may be set for the regular level, and a level weighted value 1 may be set for the hibernate level. Thus, there may be a corresponding relation formed between the working levels and the level weighted values. Moreover, in the method provided by the present embodiment, the corresponding relation between the working levels and the level weighted values may be stored after the determining different level weighted values for different working levels, for ease of subsequent application. When being stored, the corresponding relation between the working levels and the level weighted values may be stored by the terminal either locally or in the cloud.

Based on the corresponding relation between the working levels and the level weighted values, the terminal may search out the level weighted values within every on-off time from the corresponding relation when it acquires the working levels of the air purifier within every on-off time.

### (2.2) the terminal obtains an actual usage duration of the air purifier by accumulating products of every on-off time and corresponding level weighted value of the air purifier.

The actual usage duration of the air purifier depends not only every on-off time of the air purifier but also the level weighted value corresponding to every on-off time. Therefore, the actual usage duration of the air purifier may be obtained through multiplying every on-off time by corresponding level weighted value of the air purifier and accumulating products thus derived.

For example, a process of obtaining the actual usage duration of the air purifier, by accumulating products of every on-off time and corresponding level weighted value of the air purifier, may refer to following detailed description about usage information and corresponding level weighted values of a air purifier illustrated in Table 3.

**Table 3**

| number of time(s) of on-off | on-off time (hour(s)) | level weighted value |
|---|---|---|
| 1 | 5 | 3 |
| 2 | 3 | 1 |
| 3 | 7 | 2 |
| 4 | 2.5 | 2 |
| 5 | 4 | 1 |

Based on the data shown in the above Table 3, the actual usage duration of the air purifier=5^{∗}3+3^{∗}1+7^{∗}2+2.5^{∗}2+4^{∗}1=41 hours.

### (2.3) the terminal calculates the current consumption of the air purifier according to the actual usage duration of the air purifier and the lifespan of the air purifier.

After obtaining the actual usage duration of the air purifier, the terminal may obtain the current consumption of the air purifier by acquiring a ratio of the actual usage duration of the air purifier to the lifespan thereof.

For example, the lifespan of the air purifier may be 5000 hours. If the actual usage duration of the air purifier obtained by the terminal, through accumulating the products of every on-off time and corresponding level weighted values of the air purifier, is 4000 hours, the current consumption of the air purifier = the actual usage duration of the air purifier / the lifespan of the air purifier = 4000/5000 =80%. That is, the current consumption of the air purifier is 80%.

### (3) Considering the working area of the air purifier

Taking an example in which the air purifier may be an air purifier, the working area may be a purifying area of the air purifier, such as 20 m²(square meters), 30 m², 50 m² or the like. Consumption of the air purifier may vary as the air purifier works with different working areas. The consumption of the air purifier may be large with a large working area, and may be smaller with a small working area.

In the present embodiment, the working areas may be stored either in the air purifier or in the terminal. Accordingly, the terminal may acquire the working areas from the air purifier by means of Bluetooth™, NFC or the like, when the working areas are stored in the air purifier; and the terminal may acquire the working areas directly from its own storage unit, when the working areas are stored in the terminal.

In order to calculate the current consumption of the air purifier more accurately, the terminal may adopt following process including (3.1)-(3.3) when calculating the current consumption of the air purifier according to the usage information of the air purifier, based on the acquired working area.

### (3.1) the terminal determines area weighted values for every on-off time, according to the working area of the air purifier within every on-off time.

In the method provided by the present embodiment, the terminal may set different area weighted values for different working areas before calculating the current consumption of the air purifier. In specific settings, the larger the working area is, the larger the area weighted value may be set by the terminal. For example, the terminal may set an area weighted value 1 for a working area of 20 m²; may set an area weighted value 3 for a working area of 50 m²; may set an area weighted value 5 for a working area of 100 m²; and the like. Moreover, in the method provided by the present embodiment, a corresponding relation between the working areas and the area weighted values may be stored after the determining different area weighted values for different working areas, for ease of subsequent application. When being stored, the corresponding relation between the working areas and the area weighted values may be stored by the terminal either locally or in the cloud.

Based on the corresponding relation between the working areas and the area weighted values, the terminal may search out the area weighted values within every on-off time from the corresponding relation when it acquires the working areas of the air purifier within every on-off time.

### (3.2) the terminal obtains an actual usage duration of the air purifier by accumulating products of every on-off time and corresponding area weighted value of the air purifier.

The actual usage duration of the air purifier depends not only every on-off time of the air purifier but also the area weighted value corresponding to every on-off time. Therefore, the actual usage duration of the air purifier may be obtained through multiplying every on-off time by corresponding area weighted value of the air purifier and accumulating products thus derived.

For example, a process of obtaining the actual usage duration of the air purifier, by accumulating products of every on-off time and corresponding area weighted value of the air purifier, may refer to following detailed description about usage information and corresponding area weighted values of a air purifier illustrated in Table 4.

**Table 4**

| number of time(s) of on-off | on-off time (hour(s)) | area weighted value |
|---|---|---|
| 1 | 5 | 1 |
| 2 | 3 | 2 |
| 3 | 7 | 2 |
| 4 | 2.5 | 2 |
| 5 | 4 | 1 |

Based on the data shown in the above Table 4, the actual usage duration of the air purifier=5^{∗}1+3^{∗}2+7^{∗}2+2.5^{∗}2+4^{∗}1=34 hours.

### (3.3) the terminal calculates the current consumption of the air purifier according to the actual usage duration of the air purifier and the lifespan of the air purifier.

After obtaining the actual usage duration of the air purifier, the terminal may obtain the current consumption of the air purifier by acquiring a ratio of the actual usage duration of the air purifier to the lifespan thereof.

For example, the lifespan of the air purifier may be 5000 hours. If the actual usage duration of the air purifier obtained by the terminal, through accumulating the products of every on-off time and corresponding area weighted values of the air purifier, is 3000 hours, the current consumption of the air purifier = the actual usage duration of the air purifier / the lifespan of the air purifier = 3000/5000 =60%. That is, the current consumption of the air purifier is 60%.

Those processes of calculation described above are directed to the current consumption of the air purifier subjected to one of those factors. However, the air purifier may be subjected to several factors mentioned above at the same time during work. In other words, it is possible that the air purifier may be influenced by at least two of those factors mentioned above during work. In this case, when the terminal calculates the current consumption of the air purifier, the actual usage duration of the air purifier may be obtained through accumulating products of every on-off time and corresponding weighted values of the air purifier. Further, the current consumption of the air purifier may be calculated according to the actual usage duration of the air purifier and the lifespan thereof.

For a better understanding of the above process, a detailed description about an example of Table 5 may be referred to.

**Table 5**

| number of time(s) of on-off | on-off time (hour(s)) | environment weighted value | area weighted value |
|---|---|---|---|
| 1 | 5 | 3 | 1 |
| 2 | 3 | 2 | 2 |
| 3 | 7 | 4 | 2 |
| 4 | 2.5 | 2 | 2 |
| 5 | 4 | 3 | 1 |

Based on the usage information of the air purifier, acquired by the terminal and shown in the above Table 5, the actual usage duration of the air purifier =5^{∗}3^{∗}1+3^{∗}2^{∗}2+7^{∗}4^{∗}2+2.5^{∗}2^{∗}2+4^{∗}3^{∗}1=105 hours. If the lifespan of the air purifier is 200 hours, the current consumption of the air purifier = 105/200=52.5%. That is, the current consumption of the air purifier is 52.5%.

The calculation of weighted values described above serves only as examples. Other algorithms may be also possible based on those influence factors, detailed descriptions of which are omitted herein.

In step 203, the terminal alerts about a current status of the air purifier when the consumption reaches a preset consumption alerting threshold.

Wherein, the preset consumption alerting threshold may be regarded as a key point of the consumption of the air purifier, which may be obtained through experiments conducted to the air purifier. In order to enable a more user-friendly alert, the preset consumption alerting threshold may include a first threshold, a second threshold, a third threshold and the like. In the present embodiment, the first threshold is smaller than the second threshold, and the second threshold is smaller than the third threshold. The consumption of the air purifier corresponding to the first threshold may be relatively small, such as 12%, 10% or the like. The consumption of the air purifier corresponding to the second threshold may be relatively large, such as 30%, 20% or the like. The consumption of the air purifier corresponding to the third threshold may be extremely large, such as 60%, 50% or the like. However, the first, second, and third threshold are not limited by the present embodiment.

In the present embodiment, after the current consumption of the air purifier is calculated, a data display page may be displayed on a display interface of the terminal, which is used to display the current consumption of the air purifier. The terminal may display the current consumption of the air purifier on the data display page, either when the working level of the air purifier changes, or when the air purifier is turned on/off, so as to improve efficiency of alerting.

In order to perform timely notification about current status of the air purifier, and to prevent the air purifier from failing to work, the terminal may alert about the current status of the air purifier when the current consumption of the air purifier reaches the preset consumption alerting threshold. As the preset consumption alerting threshold includes the first, second and third threshold, following three manners may be adopted to alert about the current status of the air purifier according to different values of the preset consumption alerting threshold.

A first manner: when the current consumption of the air purifier reaches the first threshold, which is relatively small and indicates that the air purifier can work normally in a relatively long period, a first alerting manner may be adopted by the terminal to alert about the current status of apparatus.

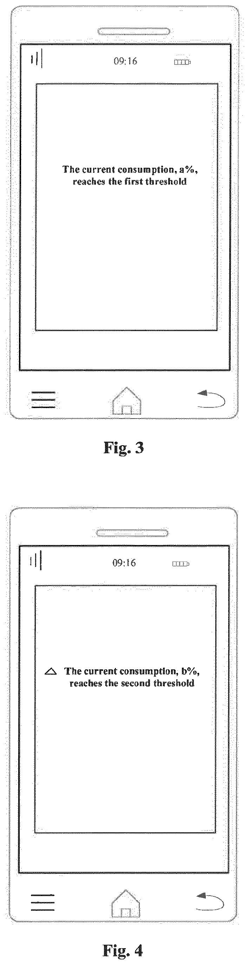

Wherein, the first alerting manner may be of a low alerting level, in which regular alerting manners, such as changing display colors and using bold font for display, may be adopted to perform the notification. Taking Fig. 3 as an example, the first threshold may be set as *a%.* When the current consumption of the air purifier reaches *a%,* the terminal may adopt a manner of using bold font for display, and thus display "The current consumption, *a*%, reaches the first threshold" on the data display page.

A second manner: when the current consumption of the air purifier reaches the second threshold, which is relatively large and indicates that the air purifier can work normally in a relatively short period, a second alerting manner may be adopted by the terminal to alert about the current status of apparatus.

Wherein, the second alerting manner may be of a medium alerting level, in which general alerting manners, such as changing display colors with an appended alerting mark, or using bold font for display with an appended alerting mark, may be adopted to perform the notification. The alerting mark may include a check mark, a triangle mark and the like. Taking Fig. 4 as an example, the second threshold may be set as *b*%. When the current consumption of the air purifier reaches *b*%, the terminal may adopt a manner of using bold font for display with an appended triangle as the alerting mark, and thus display "The current consumption, *b*%, reaches the second threshold" on the data display page.

A third manner: when the current consumption of the air purifier reaches the third threshold, which is relatively large and indicates that usage duration of the air purifier is about to reach the lifespan thereof, a third alerting manner may be adopted by the terminal to alert about the current status of apparatus.

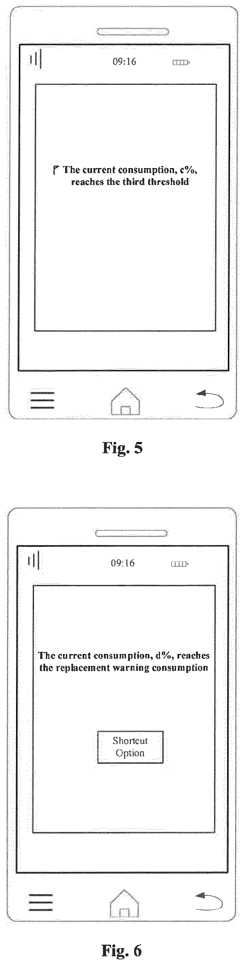

Wherein, the third alerting manner may be of a high alerting level, in which urgent alerting mark may be displayed rollingly. The urgent alerting mark may include an exclamation mark, a flag mark and the like. Taking Fig. 5 as an example, the third threshold may be set as c%. When the current consumption of the air purifier reaches c%, the terminal may adopt a manner of displaying a flag mark rollingly, and thus display "The current consumption, c%, reaches the third threshold" on the data display page.

In step 204, the terminal displays a shortcut purchase option, used to purchase the air purifier, when the current consumption reaches a replacement warning consumption.

In the present embodiment, in order to enable the air purifier to be kept always in a normal working condition, and thus to establish a good living place for the user, the terminal may further display the shortcut purchase option, used to purchase the air purifier, if the current consumption of the air purifier calculated reaches the replacement warning consumption. When it is detected that the shortcut purchase option is selected, the terminal may switch the data display page currently displayed to a purchase link of the air purifier, by which the user can purchase the air purifier.

In the present embodiment, the replacement warning consumption may be a minimum consumption with which the air purifier can be kept in the normal working condition. If the user fails to replace the air purifier timely after the replacement warning consumption is reached, the air purifier would be unable to work normally. In view of significance of the replacement warning consumption, following manners may be adopted by the terminal to determine the replacement warning consumption.
Firstly, the terminal acquires purchase history of a user account.
   When a user consumes on Internet, information of user consuming may be recorded in the user account, including such as time of user consuming, items the user purchased, a shipping address of seller and a delivery address of the user, which may be regarded as the purchase history. The purchase history corresponding to the air purifier may be searched out from numerous purchase history of the user account according to a keyword, such as an apparatus name, of the air purifier, and thus may be acquired.
Secondly, the terminal determines the replacement warning consumption according to the current consumption, the usage information and the purchase history of the user account.

A process of determining the replacement warning consumption, according to the current consumption, the usage information and the purchase history of the user account, may be referred to following (1)-(3).
(1) The terminal determines a remainder days of usage according to the usage information and the current consumption.
   In the present embodiment, the usage information may include the on-off time, and numbers of on-off of the air purifier. Based on content included in the usage information, the terminal may determine a usage frequency of the user according to the numbers of on-off in the usage information, determine a usage intensity of the user according to the on-off time in the usage information, and further calculate a daily consumption of the air purifier according to the usage frequency and the usage intensity of the user. Finally, the remainder days of usage of the air purifier may be calculated based on the current consumption of the air purifier and the daily consumption thereof.
   In addition to the manner of determining the remainder days of usage described above, the terminal may also preset a remainder days of usage. For example, the terminal may set the remainder days of usage as 6 days, 8 days and the like.
(2) The terminal determines a logistic time according to the shipping address of seller and the delivery address of user from the purchase history of the user account.
   Based on the shipping address of seller and the delivery address of user stored in the purchase history of the user account, the terminal may determine the logistic time required from the shipping address of seller to the delivery address of user, according to delivery history. Moreover, the terminal may set a preset logistic days, and determine the logistic time as the preset logistic days. Wherein, the preset logistic days may be 3 days, 5 days or the like.
(3) The terminal determines the replacement warning consumption of the air purifier, according to the remainder days of usage and the logistic time.

The terminal may acquire the daily consumption of the air purifier according to the remainder days of usage of the air purifier. Taking into account the logistic days required from the shipping of seller to the receiving of user, the terminal can determine the replacement warning consumption of the air purifier on the premise of normal work of the air purifier.

For example, assuming that the remainder days of usage of the air purifier is 7 days and the current consumption of the air purifier is 79%, the daily consumption of the air purifier is 3%. If the logistic time is determined as 3 days according to the shipping address of seller and the delivery address of user in the purchase history of the user account, and consumption of the air purifier within these 3 days may be 9%, the terminal may determine the replacement warning consumption as 9% so as to ensure normal work of the air purifier.

For a better understanding of step S204 described above, description of Fig. 6 as an example may be referred to.

As shown in Fig. 6, the terminal determines a replacement warning consumption of d%, according to the current consumption, the usage information and the purchase history of the user account. The terminal may display the shortcut purchase option on the data display page, if the current consumption of the air purifier calculated reaches d%. When it is detected that the shortcut purchase option is selected, the terminal may switch the data display page to a purchase link of the air purifier, by which the user can purchase the air purifier.

In the method provided by the present disclosure, the usage information of the air purifier, including at least every on-off time, is acquired, the current consumption of the air purifier is calculated according to the usage information of the air purifier, and the current status of the air purifier is alerted about when the consumption reaches the preset consumption alerting threshold. Since the current consumption of the air purifier is calculated according to the usage information, which is more accurate than operation experience of users, and the users may be alerted timely when the consumption reaches the preset consumption alerting threshold, the air purifier may be enabled to be always kept in normal working condition. Furthermore, when the current consumption of the air purifier reaches the replacement warning consumption, the terminal may display the shortcut option by which the user can purchase the air purifier quickly, and thus user experience may be improved.

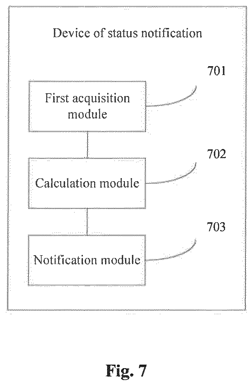

Fig. 7 is a block diagram illustrating a device of status notification, according to an exemplary embodiment. Referring to Fig. 7, the device includes a first acquisition module 701, a calculation module 702 and a notification module 703.

The first acquisition module 701 may be configured to acquire usage information of a air purifier, including at least every on-off time of the air purifier.

The calculation module 702 may be configured to calculate current consumption of the air purifier according to the usage information of the air purifier.

The notification module 703 may be configured to alert about a current status of the air purifier when the consumption reaches a preset consumption alerting threshold.

In an embodiment of the present disclosure, the first acquisition module 701 may be configured to activate a function of Bluetooth™ and acquire the usage information of the air purifier through a Bluetooth™ connection; or the first acquisition module 701 may be configured to activate a function of Near Field Communication NFC and acquire the usage information of the air purifier through a NFC data channel; or the first acquisition module 701 may be configured to receive the usage information of the air purifier forwarded by a router.

In an embodiment of the present disclosure, the notification module 703 may be configured to display a data display page, the data display page being used to display the current consumption of the air purifier; and alert about the current status of the air purifier based on the consumption displayed on the data display page, when the consumption reaches the preset consumption alerting threshold.

In an embodiment of the present disclosure, the notification module 703 may be configured to alert about the current status of the air purifier with a first alerting manner, when the consumption reaches a first threshold; alert about the current status of the air purifier with a second alerting manner, when the consumption reaches a second threshold; and alert about the current status of the air purifier with a third alerting manner, when the consumption reaches a third threshold.

Wherein, the first threshold is smaller than the second threshold, and the second threshold is smaller than the third threshold.

In an embodiment of the present disclosure, the calculation module 702 may be configured to acquire every on-off time of the air purifier; obtain a theoretical usage duration of the air purifier by accumulating every on-off time of the air purifier; and calculate the current consumption of the air purifier according to the theoretical usage duration of the air purifier and a lifespan of the air purifier.

In an embodiment of the present disclosure, the device may further include a second acquisition module.

The second acquisition module may be configured to acquire environmental data of the air purifier.

Correspondingly, the calculation module 702 may be configured to determine environment weighted values for every on-off time, according to the environmental data of the air purifier within every on-off time; obtain an actual usage duration of the air purifier by accumulating products of every on-off time and corresponding environment weighted value of the air purifier; and calculate the current consumption of the air purifier according to the actual usage duration of the air purifier and the lifespan of the air purifier.

In an embodiment of the present disclosure, the device may further include a third acquisition module.

The third acquisition module may be configured to acquire a working level of the air purifier.

Correspondingly, the calculation module 702 may be configured to determine level weighted values for every on-off time, according to the working level of the air purifier within every on-off time; obtain an actual usage duration of the air purifier by accumulating products of every on-off time and corresponding level weighted value of the air purifier; and calculate the current consumption of the air purifier according to the actual usage duration of the air purifier and the lifespan of the air purifier.

In an embodiment of the present disclosure, the device may further include a fourth acquisition module.

The fourth acquisition may be configured to acquire a working area of the air purifier.

Correspondingly, the calculation module 702 may be configured to determine area weighted values for every on-off time, according to the working area of the air purifier within every on-off time; obtain an actual usage duration of the air purifier by accumulating products of every on-off time and corresponding area weighted value of the air purifier; and calculate the current consumption of the air purifier according to the actual usage duration of the air purifier and the lifespan of the air purifier.

In an embodiment of the present disclosure, the device may further include a fifth acquisition module, a determination module, and a display module.

The fifth acquisition module may be configured to acquire purchase history of a user account.

The determination module may be configured to determine a replacement warning consumption of the air purifier, according to the current consumption, the usage information and the purchase history of the user account.

The display module may be configured to display a shortcut purchase option when the current consumption reaches the replacement warning consumption, the shortcut purchase option being used to jump to a purchase link of the air purifier.

In an embodiment of the present disclosure, the determination module may be configured to determine a remainder days of usage according to the usage information and the current consumption; determine a logistic time according to a shipping address of seller and a delivery address of user from the purchase history of the user account; and determine the replacement warning consumption of the air purifier, according to the remainder days of usage and the logistic time.

According to the device provided by the embodiment of the present disclosure, the usage information of the air purifier, including at least every on-off time, is acquired, the current consumption of the air purifier is calculated according to the usage information of the air purifier, and the current status of the air purifier is alerted about when the consumption reaches the preset consumption alerting threshold. Since the current consumption of the air purifier is calculated according to the usage information, which is more accurate than operation experience of users, and the users may be alerted timely when the consumption reaches the preset consumption alerting threshold, the air purifier may be enabled to be always kept in normal working condition.

With respect to the device in the above embodiments, the specific manners for performing operations for individual modules therein have been described in detail in the embodiments regarding the method, which will not be elaborated herein.

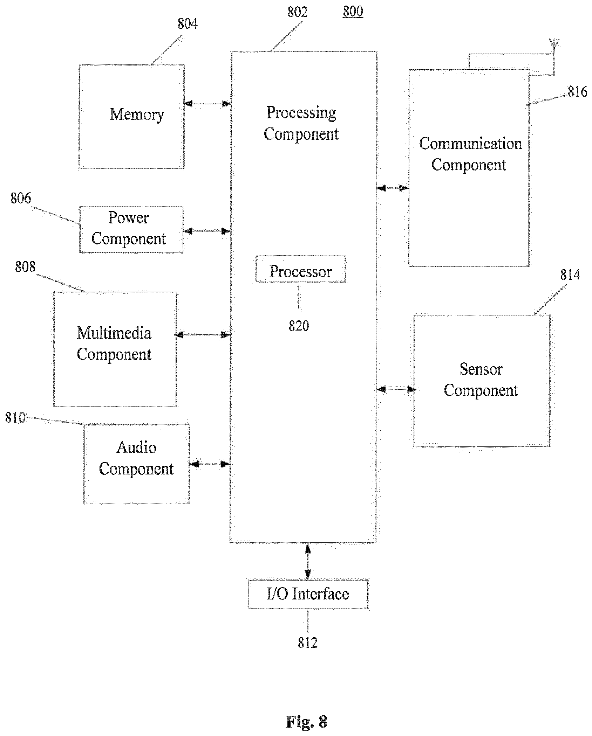

Fig. 8 is a block diagram of a device 800 of status notification, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

According to the device provided by the embodiment of the present disclosure, the usage information of the air purifier, including at least every on-off time, is acquired, the current consumption of the air purifier is calculated according to the usage information of the air purifier, and the current status of the air purifier is alerted about when the consumption reaches the preset consumption alerting threshold. Since the current consumption of the air purifier is calculated according to the usage information, which is more accurate than operation experience of users, and the users may be alerted timely when the consumption reaches the preset consumption alerting threshold, the air purifier may be enabled to be always kept in normal working condition.

A non-transitory computer-readable storage medium having stored therein instructions that, when executed by a processor of a mobile terminal, causes the mobile terminal to perform a method of status notification, the method includes:
acquiring usage information of a air purifier, the usage information including at least every on-off time of the air purifier;
calculating current consumption of the air purifier according to the usage information of the air purifier; and
alerting about a current status of the air purifier when the consumption reaches a preset consumption alerting threshold.

In an embodiment of the present disclosure, the acquiring usage information of a air purifier includes:
activating a function of Bluetooth™ and acquiring the usage information of the air purifier through a Bluetooth™ connection; or
activating a function of NFC (Near Field Communication) and acquiring the usage information of the air purifier through a NFC data channel; or
receiving the usage information of the air purifier forwarded by a router.

In an embodiment of the present disclosure, the alerting about a current status of the air purifier, when the consumption reaches a preset consumption alerting threshold, includes:
displaying a data display page, the data display page being used to display the current consumption of the air purifier; and
alerting about the current status of the air purifier based on the consumption displayed on the data display page, when the consumption reaches the preset consumption alerting threshold.

In an embodiment of the present disclosure, the alerting about a current status of the air purifier, when the consumption reaches a preset consumption alerting threshold, includes:
alerting about the current status of the air purifier with a first alerting manner, when the consumption reaches a first threshold;
alerting about the current status of the air purifier with a second alerting manner, when the consumption reaches a second threshold; and
alerting about the current status of the air purifier with a third alerting manner, when the consumption reaches a third threshold;
wherein, the first threshold is smaller than the second threshold, and the second threshold is smaller than the third threshold.

In an embodiment of the present disclosure, the calculating current consumption of the air purifier according to the usage information of the air purifier includes:
acquiring every on-off time of the air purifier;
obtaining a theoretical usage duration of the air purifier by accumulating every on-off time of the air purifier; and
calculating the current consumption of the air purifier according to the theoretical usage duration of the air purifier and a lifespan of the air purifier.

In an embodiment of the present disclosure, the method further includes:
acquiring environmental data of the air purifier;
accordingly, the calculating current consumption of the air purifier according to the usage information of the air purifier includes:
   determining environment weighted values for every on-off time, according to the environmental data of the air purifier within every on-off time;
   obtaining an actual usage duration of the air purifier by accumulating products of every on-off time and corresponding environment weighted value of the air purifier; and
   calculating the current consumption of the air purifier according to the actual usage duration of the air purifier and the lifespan of the air purifier.

In an embodiment of the present disclosure, the method further includes:
acquiring a working level of the air purifier;
accordingly, the calculating current consumption of the air purifier according to the usage information of the air purifier includes:
   determining level weighted values for every on-off time, according to the working level of the air purifier within every on-off time;
   obtaining an actual usage duration of the air purifier by accumulating products of every on-off time and corresponding level weighted value of the air purifier; and
   calculating the current consumption of the air purifier according to the actual usage duration of the air purifier and the lifespan of the air purifier.

In an embodiment of the present disclosure, the method further includes:
acquiring a working area of the air purifier;
accordingly, the calculating current consumption of the air purifier according to the usage information of the air purifier includes:
   determining area weighted values for every on-off time, according to the working area of the air purifier within every on-off time;
   obtaining an actual usage duration of the air purifier by accumulating products of every on-off time and corresponding area weighted value of the air purifier; and
   calculating the current consumption of the air purifier according to the actual usage duration of the air purifier and the lifespan of the air purifier.

In an embodiment of the present disclosure, the method further includes:
acquiring purchase history of a user account;
determining a replacement warning consumption of the air purifier, according to the current consumption, the usage information and the purchase history of the user account; and
displaying a shortcut purchase option when the current consumption reaches the replacement warning consumption, the shortcut purchase option being used to jump to a purchase link of the air purifier.

In an embodiment of the present disclosure, the determining a replacement warning consumption of the air purifier, according to the current consumption, the usage information and the purchase history of the user account, includes:
determining a remainder days of usage according to the usage information and the current consumption;
determining a logistic time according to a shipping address of seller and a delivery address of user from the purchase history of the user account; and
determining the replacement warning consumption of the air purifier, according to the remainder days of usage and the logistic time.

According to the non-transitory computer-readable storage medium provided by the embodiment of the present disclosure, the usage information of the air purifier, including at least every on-off time, is acquired, the current consumption of the air purifier is calculated according to the usage information of the air purifier, and the current status of the air purifier is alerted about when the consumption reaches the preset consumption alerting threshold. Since the current consumption of the air purifier is calculated according to the usage information, which is more accurate than operation experience of users, and the users may be alerted timely when the consumption reaches the preset consumption alerting threshold, the air purifier may be enabled to be always kept in normal working condition.

## Claims

1. A method of status notification, **characterized in that** the method comprises:
acquiring (SI01) usage information of an air purifier, the usage information comprising at least every power-on time point and power-off time point, or the usage durations therebetween, of the air purifier;
monitoring the environment around the air purifier to acquire environmental data of the air purifier, wherein the environmental data comprises particle matter concentration and/or pollutant concentration around the air purifier;
calculating (S102) current consumption of the air purifier usage lifetime according to the usage durations of the air purifier; and
alerting (S103) about a current status of the air purifier when the consumption reaches a preset consumption alerting threshold;
wherein, the calculating current consumption of the air purifier usage lifetime according to the usage information of the air purifier comprises:
determining environment weighted values for every usage duration, according to the environmental data of the air purifier within every usage duration;
obtaining an actual usage duration of the air purifier by accumulating products of every usage duration and corresponding environment weighted value of the air purifier; and
calculating the current consumption of the air purifier usage lifetime according to the actual usage duration of the air purifier and a lifespan of the air purifier.

2. The method of claim 1, **characterized in that** the acquiring usage information of an air purifier comprises:
activating a Bluetooth™ function and acquiring the usage information of the air purifier through a Bluetooth™ connection; or
activating a Near Field Communication NFC function and acquiring the usage information of the air purifier through a NFC data channel; or
receiving the usage information of the air purifier forwarded by a router.

3. The method of claim 1 or 2, **characterized in that** the alerting about a current status of the air purifier, when the consumption reaches a preset consumption alerting threshold, comprises:
displaying a data display page, the data display page being used to display the current consumption of the air purifier usage lifetime; and
alerting about the current status of the air purifier, when the consumption reaches the preset consumption alerting threshold, based on the consumption displayed on the data display page.

4. The method of claim 3, **characterized in that** the alerting about a current status of the air purifier, when the consumption reaches a preset consumption alerting threshold, comprises:
alerting about the current status of the air purifier usage lifetime with a first alerting manner, when the consumption reaches a first threshold;
alerting about the current status of the air purifier usage lifetime with a second alerting manner, when the consumption reaches a second threshold; and
alerting about the current status of the air purifier usage lifetime with a third alerting manner, when the consumption reaches a third threshold;
wherein, the first threshold is smaller than the second threshold, and the second threshold is smaller than the third threshold.

5. The method of any preceding claim, **characterized in that** the calculating current consumption of the air purifier usage lifetime according to the usage information of the air purifier comprises:
acquiring every power-on time point and power-off time point, or the usage durations therebetween, of the air purifier;
obtaining a theoretical usage duration of the air purifier by accumulating every power-on time point and power-off time point, or the usage durations therebetween, of the air purifier; and
calculating the current consumption of the air purifier usage lifetime according to the theoretical usage duration of the air purifier and a lifespan of the air purifier.

6. The method of any preceding claim, **characterized in that**, the method further comprises:
acquiring a working level of the air purifier indicative of the power level at which the air purifier is working;
wherein, the calculating current consumption of the air purifier usage lifetime according to the usage information of the air purifier comprises:
determining level weighted values for every usage duration, according to the working level of the air purifier within every usage duration;
obtaining an actual usage duration of the air purifier by accumulating products of every usage duration and corresponding level weighted value of the air purifier; and
calculating the current consumption of the air purifier usage lifetime according to the actual usage duration of the air purifier and a lifespan of the air purifier.

7. The method of any preceding claim, **characterized in that** the method further comprises:
acquiring a working area of the air purifier indicative of the size of the area in which the air purifier is operating;
wherein, the calculating current consumption of the air purifier usage lifetime according to the usage information of the air purifier comprises:
determining area weighted values for every usage duration, according to the working area of the air purifier within every usage duration;
obtaining an actual usage duration of the air purifier by accumulating products of every usage duration and corresponding area weighted value of the air purifier; and
calculating the current consumption of the air purifier usage lifetime according to the actual usage duration of the air purifier and the lifespan of the air purifier.

8. The method of any preceding claim, **characterized in that** the method further comprises:
acquiring purchase history of a user account;
determining a replacement warning consumption of the air purifier, according to the current consumption, the usage information and the purchase history of the user account; and
displaying a shortcut purchase option when the current consumption reaches the replacement warning consumption, the shortcut purchase option being used to jump to a purchase link of the air purifier.

9. The method of claim 8, **characterized in that** the determining a replacement warning consumption of the air purifier, according to the current consumption, the usage information and the purchase history of the user account, comprises:
determining a remainder of days of usage according to the usage information and the current consumption;
determining a logistic time according to a shipping address of the seller and a delivery address of the user from the purchase history of the user account; and
determining the replacement warning consumption of the air purifier, according to the remainder of days of usage and the logistic time.

10. A device for status notification, **characterized in that**, the device comprises:
a first acquisition module (701), configured to acquire usage information of an air purifier, the usage information comprising at least every power-on time point and power-off time point, or the usage durations therebetween, of the air purifier;
a second acquisition module, configured to monitor the environment around the air purifier to acquire environmental data of the air purifier, wherein the environmental data comprises particle matter concentration and/or pollutant concentration around the air purifier
a calculation module (702), configured to calculate current consumption of the air purifier usage lifetime according to the usage durations of the air purifier;
a notification module (703), configured to alert about a current status of the air purifier when the consumption reaches a preset consumption alerting threshold;
wherein, the calculation module (702) is further configured to:
determine environment weighted values for every usage duration, according to the environmental data of the air purifier within every usage duration;
obtain an actual usage duration of the air purifier by accumulating products of every usage duration and corresponding environment weighted value of the air purifier; and calculate the current consumption of the air purifier usage lifetime according to the actual usage duration of the air purifier and a lifespan of the air purifier.

11. The device of claim 10, **characterized in that** the device further comprises:
a third acquisition module, configured to acquire a working level of the air purifier indicative of the power level at which the air purifier is working;
wherein, the calculation module is configured to determine level weighted values for every usage duration, according to the working level of the air purifier within every usage duration; obtain an actual usage duration of the air purifier by accumulating products of every usage duration and corresponding level weighted value of the air purifier; and calculate the current consumption of the air purifier usage lifetime according to the actual usage duration of the air purifier and a lifespan of the air purifier.

12. The device of claim 10 or 11, **characterized in that** the device further comprises:
a fourth acquisition, configured to acquire a working area of the air purifier indicative of the size of the area in which the air purifier is operating;
wherein, the calculation module is configured to determine area weighted values for every usage duration, according to the working area of the air purifier within every usage duration; obtain an actual usage duration of the air purifier by accumulating products of every usage duration and corresponding area weighted value of the air purifier; and calculate the current consumption of the air purifier usage lifetime according to the actual usage duration of the air purifier and a lifespan of the air purifier.

13. The device of any one of claims 10 to 12, **characterized in that** the device further comprises:
a fifth acquisition module, configured to acquire purchase history of a user account;
a determination module, configured to determine a replacement warning consumption of the air purifier, according to the current consumption, the usage information and the purchase history of the user account; and
a display module, configured to display a shortcut purchase option when the current consumption reaches the replacement warning consumption, the shortcut purchase option being used to jump to a purchase link of the air purifier.

14. A computer program, which when executing on a processor of a computing device, causes it to perform a method according to any one of claims 1 to 9.

## Patentansprüche

1. Verfahren zur Statusbenachrichtigung, **dadurch gekennzeichnet, dass** das Verfahren Folgendes aufweist:
Erfassen (S101) von Nutzungsinformationen eines Luftreinigers, wobei die Nutzungsinformationen wenigstens jeden Einschaltzeitpunkt und Ausschaltzeitpunkt oder die dazwischenliegenden Nutzungsdauern des Luftreinigers aufweisen;
Überwachen der Umgebung um den Luftreiniger zum Erfassen von Umweltdaten des Luftreinigers, wobei die Umweltdaten die Partikelmassekonzentration und/oder Schadstoffkonzentration um den Luftreiniger aufweisen;
Berechnen (S102) des aktuellen Verbrauchs der Luftreinigerstandzeit gemäß den Nutzungsdauern des Luftreinigers; und
Alarmieren (S103) bezüglich des aktuellen Status des Luftreinigers, wenn der Verbrauch eine voreingestellte Verbrauchsalarmierungsschwelle erreicht;
wobei das Berechnen des aktuellen Verbrauchs der Luftreinigerstandzeit gemäß den Nutzungsinformationen des Luftreinigers Folgendes aufweist:
Bestimmen von umweltgewichteten Werten für jede Nutzungsdauer gemäß den Umweltdaten des Luftreinigers innerhalb jeder Nutzungsdauer;
Erhalten einer Ist-Nutzungsdauer des Luftreinigers durch Anhäufen von Produkten jeder Nutzungsdauer und eines entsprechenden umweltgewichteten Werts des Luftreinigers; und
Berechnen des aktuellen Verbrauchs der Luftreinigerstandzeit gemäß der Ist-Nutzungsdauer des Luftreinigers und einer Lebenserwartung des Luftreinigers.

2. Verfahren nach Anspruch 1, **dadurch gekennzeichnet, dass** das Erfassen von Nutzungsinformationen eines Luftreinigers Folgendes aufweist:
Aktivieren einer Bluetooth™-Funktion und Erfassen der Nutzungsinformationen des Luftreinigers durch eine Bluetooth™-Verbindung; oder
Aktivieren einer Nahfeldkommunikations-, NFC, -Funktion und Erfassen der Nutzungsinformationen des Luftreinigers durch einen NFC-Datenkanal; oder
Empfangen der von einem Router weitergeleiteten Nutzungsinformationen des Luftreinigers.

3. Verfahren nach Anspruch 1 oder 2, **dadurch gekennzeichnet, dass** das Alarmieren bezüglich eines aktuellen Status des Luftreinigers, wenn der Verbrauch eine voreingestellte Verbrauchsalarmierungsschwelle erreicht, Folgendes aufweist:
Anzeigen einer Datenanzeigeseite, wobei die Datenanzeigeseite zum Anzeigen des aktuellen Verbrauchs der Luftreinigerstandzeit verwendet wird; und
Alarmieren bezüglich des aktuellen Status des Luftreinigers, wenn der Verbrauch die voreingestellte Verbrauchsalarmierungsschwelle erreicht, auf Basis des auf der Datenanzeigeseite angezeigten Verbrauchs.

4. Verfahren nach Anspruch 3, **dadurch gekennzeichnet, dass** das Alarmieren bezüglich eines aktuellen Status des Luftreinigers, wenn der Verbrauch eine voreingestellte Verbrauchsalarmierungsschwelle erreicht, Folgendes aufweist:
Alarmieren bezüglich des aktuellen Status der Luftreinigerstandzeit mit einer ersten Alarmierungsweise, wenn der Verbrauch eine erste Schwelle erreicht;
Alarmieren bezüglich des aktuellen Status der Luftreinigerstandzeit mit einer zweiten Alarmierungsweise, wenn der Verbrauch eine zweite Schwelle erreicht; und
Alarmieren bezüglich des aktuellen Status der Luftreinigerstandzeit mit einer dritten Alarmierungsweise, wenn der Verbrauch eine dritte Schwelle erreicht;
wobei die erste Schwelle kleiner als die zweite Schwelle ist und die zweite Schwelle kleiner als die dritte Schwelle ist.

5. Verfahren nach einem der vorhergehenden Ansprüche, **dadurch gekennzeichnet, dass** das Berechnen des aktuellen Verbrauchs der Luftreinigerstandzeit gemäß den Nutzungsinformationen des Luftreinigers Folgendes aufweist:
Erfassen jedes Einschaltzeitpunkts und Ausschaltzeitpunkts oder der dazwischenliegenden Nutzungsdauern des Luftreinigers;
Erhalten einer theoretischen Nutzungsdauer des Luftreinigers durch Anhäufen jedes Einschaltzeitpunkts und jedes Ausschaltzeitpunkts oder der dazwischenliegenden Nutzungsdauern des Luftreinigers; und
Berechnen des aktuellen Verbrauchs der Luftreinigerstandzeit gemäß der theoretischen Nutzungsdauer des Luftreinigers und einer Lebenserwartung des Luftreinigers.

6. Verfahren nach einem der vorhergehenden Ansprüche, **dadurch gekennzeichnet, dass** das Verfahren ferner Folgendes aufweist:
Erfassen eines Arbeitsniveaus des Luftreinigers, das das Leistungsniveau, auf dem der Luftreiniger arbeitet, erkennen lässt;
wobei das Berechnen des aktuellen Verbrauchs der Luftreinigerstandzeit gemäß den Nutzungsinformationen des Luftreinigers Folgendes aufweist:
Bestimmen niveaugewichteter Werte für jede Nutzungsdauer gemäß dem Arbeitsniveau des Luftreinigers innerhalb jeder Nutzungsdauer;
Erhalten einer Ist-Nutzungsdauer des Luftreinigers durch Anhäufen von Produkten jeder Nutzungsdauer und eines entsprechenden niveaugewichteten Werts des Luftreinigers; und
Berechnen des aktuellen Verbrauchs der Luftreinigerstandzeit gemäß der Ist-Nutzungsdauer des Luftreinigers und einer Lebenserwartung des Luftreinigers.

7. Verfahren nach einem der vorhergehenden Ansprüche, **dadurch gekennzeichnet, dass** das Verfahren ferner Folgendes aufweist:
Erfassen eines Arbeitsbereichs des Luftreinigers, der die Größe des Bereichs erkennen lässt, in dem der Luftreiniger arbeitet;
wobei das Berechnen des aktuellen Verbrauchs der Luftreinigerstandzeit gemäß den Nutzungsinformationen des Luftreinigers Folgendes aufweist:
Bestimmen von bereichsgewichteten Werten für jede Nutzungsdauer gemäß dem Arbeitsbereich des Luftreinigers in jeder Nutzungsdauer;
Erhalten einer Ist-Nutzungsdauer des Luftreinigers durch Anhäufen von Produkten jeder Nutzungsdauer und des entsprechenden bereichsgewichteten Werts des Luftreinigers; und
Berechnen des aktuellen Verbrauchs der Luftreinigerstandzeit gemäß der Ist-Nutzungsdauer des Luftreinigers und der Lebenserwartung des Luftreinigers.

8. Verfahren nach einem der vorhergehenden Ansprüche, **dadurch gekennzeichnet, dass** das Verfahren ferner Folgendes aufweist:
Erfassen der Kaufhistorie eines Benutzerkontos;
Bestimmen eines Austauschwarnungsverbrauchs des Luftreinigers gemäß dem aktuellen Verbrauch, den Nutzungsinformationen und der Kaufhistorie des Benutzerkontos; und
Anzeigen einer Kaufoptionsverknüpfung, wenn der aktuelle Verbrauch den Austauschwarnungsverbrauch erreicht, wobei die Kaufoptionsverknüpfung zum Springen zu einem Kauf-Link des Luftreinigers verwendet wird.

9. Verfahren nach Anspruch 8, **dadurch gekennzeichnet, dass** das Bestimmen eines Austauschwarnungsverbrauchs des Luftreinigers gemäß dem aktuellen Verbrauch, den Nutzungsinformationen und der Kaufhistorie des Benutzerkontos Folgendes aufweist:
Bestimmen der verbleibenden Nutzungstage gemäß den Nutzungsinformationen und dem aktuellen Verbrauch;
Bestimmen einer logistischen Zeit gemäß einer Versandadresse des Verkäufers und einer Zustelladresse des Benutzers anhand der Kaufhistorie des Benutzerkontos; und
Bestimmen des Austauschwarnungsverbrauchs des Luftreinigers gemäß den verbleibenden Nutzungstagen und der logistischen Zeit.

10. Vorrichtung zur Statusbenachrichtigung, **dadurch gekennzeichnet, dass** die Vorrichtung Folgendes aufweist:
ein erstes Erfassungsmodul (701), das zum Erfassen von Nutzungsinformationen eines Luftreinigers konfiguriert ist, wobei die Nutzungsinformationen wenigstens jeden Einschaltzeitpunkt und Ausschaltzeitpunkt oder die dazwischenliegenden Nutzungsdauern des Luftreinigers aufweisen;
ein zweites Erfassungsmodul, das zum Überwachen der Umgebung um den Luftreiniger zum Erfassen von Umweltdaten des Luftreinigers konfiguriert ist, wobei die Umweltdaten die Partikelmassekonzentration und/oder Schadstoffkonzentration um den Luftreiniger aufweisen;
ein Berechnungsmodul (702), das zum Berechnen des aktuellen Verbrauchs der Luftreinigerstandzeit gemäß den Nutzungsdauern des Luftreinigers konfiguriert ist; und
ein Benachrichtigungsmodul (703), das zum Alarmieren bezüglich eines aktuellen Status des Luftreinigers, wenn der Verbrauch eine voreingestellte Verbrauchsalarmierungsschwelle erreicht, konfiguriert ist;
wobei das Berechnungsmodul (702) ferner konfiguriert ist zum:
Bestimmen von umweltgewichteten Werten für jede Nutzungsdauer gemäß den Umweltdaten des Luftreinigers innerhalb jeder Nutzungsdauer;
Erhalten einer Ist-Nutzungsdauer des Luftreinigers durch Anhäufen von Produkten jeder Nutzungsdauer und eines entsprechenden umweltgewichteten Werts des Luftreinigers; und
Berechnen des aktuellen Verbrauchs der Luftreinigerstandzeit gemäß der Ist-Nutzungsdauer des Luftreinigers und einer Lebenserwartung des Luftreinigers.

11. Vorrichtung nach Anspruch 10, **dadurch gekennzeichnet, dass** die Vorrichtung ferner Folgendes aufweist:
ein drittes Erfassungsmodul, das zum Erfassen eines Arbeitsniveaus des Luftreinigers konfiguriert ist, das das Leistungsniveau, auf dem der Luftreiniger arbeitet, erkennen lässt;
wobei das Berechnungsmodul konfiguriert ist zum Bestimmen niveaugewichteter Werte für jede Nutzungsdauer gemäß dem Arbeitsniveau des Luftreinigers innerhalb jeder Nutzungsdauer; Erhalten einer Ist-Nutzungsdauer des Luftreinigers durch Anhäufen von Produkten jeder Nutzungsdauer und eines entsprechenden niveaugewichteten Werts des Luftreinigers; und Berechnen des aktuellen Verbrauchs der Luftreinigerstandzeit gemäß der Ist-Nutzungsdauer des Luftreinigers und einer Lebenserwartung des Luftreinigers.

12. Vorrichtung nach Anspruch 10 oder 11, **dadurch gekennzeichnet, dass** die Vorrichtung ferner Folgendes aufweist:
ein viertes Erfassungsmodul, das zum Erfassen eines Arbeitsbereichs des Luftreinigers, der die Größe des Bereichs erkennen lässt, in dem der Luftreiniger arbeitet, konfiguriert ist;
wobei das Berechnungsmodul konfiguriert ist zum Bestimmen von bereichsgewichteten Werten für jede Nutzungsdauer gemäß dem Arbeitsbereich des Luftreinigers in jeder Nutzungsdauer; Erhalten einer Ist-Nutzungsdauer des Luftreinigers durch Anhäufen von Produkten jeder Nutzungsdauer und des entsprechenden bereichsgewichteten Werts des Luftreinigers; und Berechnen des aktuellen Verbrauchs der Luftreinigerstandzeit gemäß der Ist-Nutzungsdauer des Luftreinigers und einer Lebenserwartung des Luftreinigers.

13. Vorrichtung nach einem der Ansprüche 10 bis 12, **dadurch gekennzeichnet, dass** die Vorrichtung ferner Folgendes aufweist:
ein fünftes Erfassungsmodul, das zum Erfassen der Kaufhistorie eines Benutzerkontos konfiguriert ist;
ein Bestimmungsmodul, das zum Bestimmen eines Austauschwarnungsverbrauchs des Luftreinigers gemäß dem aktuellen Verbrauch, den Nutzungsinformationen und der Kaufhistorie des Benutzerkontos konfiguriert ist; und
ein Anzeigemodul, das zum Anzeigen einer Kaufoptionsverknüpfung, wenn der aktuelle Verbrauch den Austauschwarnungsverbrauch erreicht, wobei die Kaufoptionsverknüpfung zum Springen zu einem Kauf-Link des Luftreinigers verwendet wird.

14. Computerprogramm, das bei Ausführung in einem Prozessor einer Rechenvorrichtung diesen zum Durchführen eines Verfahrens nach einem der Ansprüche 1 bis 9 veranlasst.

## Revendications

1. Procédé de notification d'état, **caractérisé en ce que** le procédé comprend :
acquérir (S101) des informations d'utilisation d'un assainisseur d'air, les informations d'utilisation comprenant au moins chaque point dans le temps de mise en circuit et chaque point dans le temps de mise hors circuit, ou bien les durées d'utilisation entre ceux-ci, de l'assainisseur d'air ;
surveiller le milieu ambiant autour de l'assainisseur d'air afin d'acquérir des données environnementales de l'assainisseur d'air, où les données environnementales comprennent une concentration de matières particulaires et/ou une concentration de polluant autour de l'assainisseur d'air ;
calculer (S 102) une consommation courante de la durée de vie d'utilisation de l'assainisseur d'air selon les durées d'utilisation de l'assainisseur d'air ; et
alerter (S103) sur l'état courant de l'assainisseur d'air lorsque la consommation atteint un seuil d'alerte de consommation préréglé ;
dans lequel, le fait de calculer la consommation courante de la durée de vie de l'assainisseur d'air selon les informations d'utilisation de l'assainisseur d'air comprend :
déterminer des valeurs pondérées de milieu ambiant pour chaque durée d'utilisation, selon les données environnementales de l'assainisseur d'air à chaque durée d'utilisation ;
obtenir une durée d'utilisation réelle de l'assainisseur d'air en accumulant les produits de chaque durée d'utilisation et la valeur pondérée de milieu ambiant correspondante de l'assainisseur d'air ; et
calculer la consommation courante de la durée de vie d'utilisation de l'assainisseur d'air selon la durée d'utilisation réelle de l'assainisseur d'air et une durabilité de l'assainisseur d'air.

2. Procédé selon la revendication 1, **caractérisé en ce que** le fait d'acquérir des informations d'utilisation d'un assainisseur d'air comprend :
activer une fonction Bluetooth™ et acquérir les informations d'utilisation de l'assainisseur d'air par une connexion Bluetooth™; ou bien
activer une fonction de communication en champ proche (NFC) et acquérir les informations d'utilisation de l'assainisseur d'air par un canal de données NFC ; ou bien
recevoir les informations d'utilisation de l'assainisseur d'air acheminées par un routeur.

3. Procédé selon la revendication 1 ou 2, **caractérisé en ce que** le fait d'alerter sur un état courant de l'assainisseur d'air, lorsque la consommation atteint un seuil d'alerte de consommation préréglé, comprend :
afficher sur une page d'affichage de données, la page d'affichage de données étant utilisée pour afficher la consommation courante de la durée de vie d'utilisation de l'assainisseur d'air ; et
alerter sur l'état courant de l'assainisseur d'air, lorsque la consommation atteint le seuil d'alerte de consommation préréglé, sur la base de la consommation affichée sur la page d'affichage de données.

4. Procédé selon la revendication 3, **caractérisé en ce que** le fait d'alerter sur un état courant de l'assainisseur d'air, lorsque la consommation atteint un seuil d'alerte de consommation préréglé, comprend :
alerter sur l'état courant de la durée de vie d'utilisation de l'assainisseur d'air d'une première façon d'alerter, lorsque la consommation atteint un premier seuil ;
alerter sur l'état courant de la durée de vie d'utilisation de l'assainisseur d'air d'une deuxième façon d'alerter, lorsque la consommation atteint un deuxième seuil ; et
alerter sur l'état courant de la durée de vie d'utilisation de l'assainisseur d'air d'une troisième façon d'alerter, lorsque la consommation atteint un troisième seuil ;
dans lequel, le premier seuil est inférieur au deuxième seuil, et le deuxième seuil est inférieur au troisième seuil.

5. Procédé selon l'une quelconque des revendications précédentes, **caractérisé en ce que** le fait de calculer la consommation courante de la durée de vie d'utilisation de l'assainisseur d'air selon les informations d'utilisation de l'assainisseur d'air comprend :
acquérir chaque point dans le temps de mise en circuit et chaque point dans le temps de mise hors circuit, ou bien les durées d'utilisation entre ceux-ci, de l'assainisseur d'air ;
obtenir une durée d'utilisation théorique de l'assainisseur d'air en accumulant chaque point dans le temps de mise en circuit et chaque point dans le temps de mise hors circuit, ou bien les durées d'utilisation entre ceux-ci, de l'assainisseur d'air ; et
calculer la consommation courante de la durée de vie d'utilisation de l'assainisseur d'air selon la durée d'utilisation théorique de l'assainisseur d'air et une durabilité de l'assainisseur d'air.

6. Procédé selon l'une quelconque des revendications précédentes, **caractérisé en ce que**, le procédé comprend en outre :
acquérir un niveau de fonctionnement de l'assainisseur d'air indicatif du niveau de puissance auquel l'assainisseur d'air fonctionne ;
dans lequel, le fait de calculer la consommation courante de la durée de vie d'utilisation d'assainisseur d'air selon les informations d'utilisation de l'assainisseur d'air comprend :
déterminer des valeurs pondérées de niveau pour chaque durée d'utilisation, selon le niveau de fonctionnement de l'assainisseur d'air à chaque durée d'utilisation ;
obtenir une durée d'utilisation réelle de l'assainisseur d'air en accumulant les produits de chaque durée d'utilisation et la valeur pondérée de niveau correspondante de l'assainisseur d'air ; et
calculer la consommation courante de la durée de vie d'utilisation de l'assainisseur d'air selon la durée d'utilisation réelle de l'assainisseur d'air et une durabilité de l'assainisseur d'air.

7. Procédé selon l'une quelconque des revendications précédentes, **caractérisé en ce que** le procédé comprend en outre :
acquérir un espace de fonctionnement de l'assainisseur d'air indicatif de la taille de l'espace dans lequel l'assainisseur d'air fonctionne ;
dans lequel, le fait de calculer la consommation courante de la durée de vie d'utilisation de l'assainisseur d'air selon les informations d'utilisation de l'assainisseur d'air comprend :
déterminer des valeurs pondérées d'espace pour chaque durée d'utilisation, selon l'espace de fonctionnement de l'assainisseur d'air à chaque durée d'utilisation ;
obtenir une durée d'utilisation réelle de l'assainisseur d'air en accumulant les produits de chaque durée d'utilisation et la valeur pondérée d'espace correspondante de l'assainisseur d'air ; et
calculer la consommation courante de la durée de vie d'utilisation de l'assainisseur d'air selon la durée d'utilisation réelle de l'assainisseur d'air et une durabilité de l'assainisseur d'air.

8. Procédé selon l'une quelconque des revendications précédentes, **caractérisé en ce que** le procédé comprend en outre :
acquérir l'historique d'achat d'un compte utilisateur ;
déterminer une consommation d'avertissement de remplacement de l'assainisseur d'air, selon la consommation courante, les informations d'utilisation et l'historique d'achat du compte utilisateur ; et
afficher une option d'achat rapide lorsque la consommation courante atteint la consommation d'avertissement de remplacement, l'option d'achat rapide étant utilisée pour sauter à un lien d'achat de l'assainisseur d'air.

9. Procédé selon la revendication 8, **caractérisé en ce que** le fait de déterminer une consommation d'avertissement de remplacement de l'assainisseur d'air, selon la consommation courante, les informations d'utilisation et l'historique d'achat du compte utilisateur comprend :
déterminer un reste de jours d'utilisation selon les informations d'utilisation et la consommation courante ;
déterminer un temps logistique selon une adresse d'envoi du vendeur et une adresse de livraison de l'utilisateur à partir de l'historique d'achat du compte utilisateur ;
et
déterminer la consommation d'avertissement de remplacement de l'assainisseur d'air, selon le reste de jours d'utilisation et le temps logistique.

10. Dispositif de notification d'état, **caractérisé en ce que**, le dispositif comprend :
un premier module d'acquisition (701), configuré pour acquérir des informations d'utilisation d'un assainisseur d'air, les informations d'utilisation comprenant au moins chaque point dans le temps de mise en circuit et chaque point dans le temps de mise hors circuit, ou bien les durées d'utilisation entre ceux-ci, de l'assainisseur d'air ;
un deuxième module d'acquisition, configuré pour surveiller le milieu ambiant autour de l'assainisseur d'air afin d'acquérir des données environnementales de l'assainisseur d'air, où les données environnementales comprennent une concentration de matières particulaires et/ou une concentration de polluant autour de l'assainisseur d'air ;
un module de calcul (702), configuré pour calculer une consommation courante de la durée de vie d'utilisation de l'assainisseur d'air selon les durées d'utilisation de l'assainisseur d'air ; et
un module de notification (703), configuré pour alerter sur l'état courant de l'assainisseur d'air lorsque la consommation atteint un seuil d'alerte de consommation préréglé ;
dans lequel, le module de calcul (702) est configuré en outre pour :
déterminer des valeurs pondérées de milieu ambiant pour chaque durée d'utilisation, selon les données environnementales de l'assainisseur d'air à chaque durée d'utilisation ;
obtenir une durée d'utilisation réelle de l'assainisseur d'air en accumulant les produits de chaque durée d'utilisation et la valeur pondérée de milieu ambiant correspondante de l'assainisseur d'air ; et
calculer la consommation courante de la durée de vie d'utilisation de l'assainisseur d'air selon la durée d'utilisation réelle de l'assainisseur d'air et une durabilité de l'assainisseur d'air.

11. Dispositif selon la revendication 10, **caractérisé en ce que** le dispositif comprend en outre :
un troisième module d'acquisition, configuré pour acquérir un niveau de fonctionnement de l'assainisseur d'air indicatif du niveau de puissance auquel l'assainisseur d'air fonctionne ;
dans lequel, le module de calcul est configuré pour déterminer des valeurs pondérées de niveau pour chaque durée d'utilisation, selon le niveau de fonctionnement de l'assainisseur d'air à chaque durée d'utilisation ; obtenir une durée d'utilisation réelle de l'assainisseur d'air en accumulant les produits de chaque durée d'utilisation et la valeur pondérée de niveau correspondante de l'assainisseur d'air, et calculer la consommation courante de la durée de vie d'utilisation de l'assainisseur d'air selon la durée d'utilisation réelle de l'assainisseur d'air et une durabilité de l'assainisseur d'air.

12. Dispositif selon la revendication 10 ou 11, **caractérisé en ce que** le dispositif comprend en outre :
une quatrième acquisition, configurée pour acquérir un espace de fonctionnement de l'assainisseur d'air indicatif de la taille de l'espace dans lequel l'assainisseur d'air fonctionne ;
dans lequel, le module de calcul est configuré pour déterminer des valeurs pondérées d'espace pour chaque durée d'utilisation, selon l'espace de fonctionnement de l'assainisseur d'air à chaque durée d'utilisation ; obtenir une durée d'utilisation réelle de l'assainisseur d'air en accumulant les produits de chaque durée d'utilisation et la valeur pondérée d'espace correspondante de l'assainisseur d'air, et calculer la consommation courante de la durée de vie d'utilisation de l'assainisseur d'air selon la durée d'utilisation réelle de l'assainisseur d'air et une durabilité de l'assainisseur d'air.

13. Dispositif selon l'une quelconque des revendications 10 à 12, **caractérisé en ce que** le dispositif comprend en outre :
un cinquième module d'acquisition, configuré pour acquérir un historique d'achat d'un compte utilisateur ;
un module de détermination, configuré pour déterminer une consommation d'avertissement de remplacement de l'assainisseur d'air, selon la consommation courante, les informations d'utilisation et l'historique d'achat du compte utilisateur ; et
un module d'affichage, configuré pour afficher une option d'achat rapide lorsque la consommation courante atteint la consommation d'avertissement de remplacement, l'option d'achat rapide étant utilisée pour sauter à un lien d'achat de l'assainisseur d'air.

14. Programme informatique, qui lorsque exécuté sur un processeur d'un dispositif informatique, fait qu'il mette en oeuvre un procédé selon l'une quelconque des revendications 1 à 9.
